# EUROPEAN PATENT APPLICATION

(11) **EP 4 331 402 A1**
(43) Date of publication of application: **06.03.2024**
(21) Application number: 22795270.2
(22) Date of filing: 28.02.2022
(51) Int. Cl.: A24F 40/40, A24F 40/50, A24F 40/65, G06F 3/01

(54) **AEROSOL GENERATION DEVICE, METHOD FOR CONTROLLING AEROSOL GENERATION DEVICE, AND PROGRAM**

(30) Priority: 28.04.2021 JP 2021076012
(71) Applicant: Japan Tobacco Inc., Tokyo 105-6927 (JP)
(72) Inventor: YOSHIDA, Ryo, Tokyo 130-8603 (JP); AOYAMA, Tatsunari, Tokyo 130-8603 (JP); KAWANAGO, Hiroshi, Tokyo 130-8603 (JP); NAGAHAMA, Toru, Tokyo 130-8603 (JP); FUJIKI, Takashi, Tokyo 130-8603 (JP)
(74) Representative: Hoffmann Eitle
(86) International application number: PCT/JP2022/008330
(87) International publication number: WO 2022/230347

(57) **Abstract**

An aerosol generating apparatus of the present disclosure comprises an operation unit configured to detect an input operation by a user, and control means for, in accordance with the input operation detected by the operation unit, unlocking a locked state of the aerosol generating apparatus or unlocking the locked state and executing a predetermined function according to the input operation. If the aerosol generating apparatus is not in the locked state, the control means discriminatively receives a first operation for the operation unit and a second operation of a different operation mode for the operation unit, and if the aerosol generating apparatus is in the locked state, the control means receives the first operation for the operation unit.

## Description

### TECHNICAL FIELD

The present invention relates to an aerosol generating apparatus, a control method of the aerosol generating apparatus, and a program.

### BACKGROUND ART

In recent years, aerosol generating apparatuses such as electronic inhalation apparatuses have spread. To prevent an operation from starting due to an operation by a child or an accidental operation, there is known an aerosol generating apparatus that controls the apparatus to a locked state such that a predetermined function cannot operate. PTL 1 proposes a technique of registering, in an aerosol generating apparatus, a series of operations including short press and long press of a predetermined operation key in advance and, when unlocking the locked state, causing a user to input the series of registered operations.

### CITATION LIST

### PATENT LITERATURE

PTL 1: Japanese Patent Application No. 2009-134519

### SUMMARY OF INVENTION

### TECHNICAL PROBLEM

When unlocking the locked state, operation inputs of different operation modes such as long press and short press are required. This can make the operation inputs complex and reduce the possibility that the locked state is unlocked by unintended accidental contact.

In the aerosol generating apparatus capable of performing long press and short press, a specific combination of long press and short press can be assigned to a function, and if the specific combination is input, the assigned function can be executed. By combing operation inputs of different operation modes such as long press and short press, input operations can be assigned to various functions.

On the other hand, since the user performs an operation of generating aerosol immediately after the locked state is unlocked, he or she may want to easily unlock the locked state or unlock the locked state by a quick operation.

The present invention has been made in consideration of the above-described problem, and has as its object to implement a technique capable of unlocking a locked state by a simple operation in an aerosol generating apparatus capable of receiving input operations of different operation modes in one operation unit.

### SOLUTION TO PROBLEM

According to one aspect, it is provided an aerosol generating apparatus comprising:
an operation unit configured to detect an input operation by a user; and
control means for, in accordance with the input operation detected by the operation unit, unlocking a locked state of the aerosol generating apparatus or unlocking the locked state and executing a predetermined function according to the input operation,
wherein if the aerosol generating apparatus is not in the locked state, the control means discriminatively receives a first operation for the operation unit and a second operation of a different operation mode for the operation unit, and if the aerosol generating apparatus is in the locked state, the control means receives the first operation for the operation unit.

The first operation may be a pressing operation for the operation unit for not more than a predetermined time, and the second operation may be a pressing operation for the operation unit for a time longer than the predetermined time.

The first operation may be a pressing operation for the operation unit with not more than a predetermined force strength, and the second operation may be a pressing operation for the operation unit with a force stronger than the predetermined force.

The first operation may be a tap operation for a touch panel that is the operation unit, and the second operation may be a flick operation along a surface of the touch panel.

If the aerosol generating apparatus is in the locked state, the control means may receive the first operation and the second operation for the operation unit as the first operation without discrimination.

It further comprises setting means for setting an operation condition of the input operation determined by the user for unlocking the locked state,
wherein upon receiving the input operation in the locked state, if the operation condition of the input operation set in advance to execute the predetermined function equals the operation condition of the input operation determined by the user, the control means may execute the predetermined function.

It further comprises setting means for setting an operation condition of the input operation determined by the user for unlocking the locked state,
wherein upon receiving the input operation in the locked state, if the operation condition of the input operation set in advance to execute the predetermined function equals the operation condition of the input operation determined by the user, the control means may decide, based on priority of the predetermined function, whether to set a state in which the locked state is unlocked or execute the predetermined function according to the input operation.

The priority of the predetermined function may be able to be set by the user

The priority of the predetermined function is determined in advance, and
priority of execution of a function of doing a setting for the aerosol generating apparatus may be higher than priority of setting of the state in which the locked state is unlocked.

It further comprises communication means capable of performing short range wireless communication with an external communication device,
wherein a function of doing a setting for the aerosol generating apparatus may include a function of performing initialization of the short range wireless communication with the external communication device.

It further comprises communication means capable of performing short range wireless communication with an external communication device,
wherein the control means may receive a signal for unlocking the locked state from the external communication device for which the initialization of the short range wireless communication is performed, thereby unlocking the locked state of the aerosol generating apparatus.

If an action state of the aerosol generating apparatus is a predetermined state in which heating of heating means of the aerosol generating apparatus cannot be started, the control means may not unlock the locked state.

It further comprises a chargeable power supply,
wherein the predetermined state includes a state in which the power supply is being charged.

It further comprises a chargeable power supply,
wherein the predetermined state may include a state in which a residual battery amount of the power supply is less than a predetermined value.

The predetermined state may include a state in which the initialization of the short range wireless communication with the external communication device is being performed.

According to another aspect, there is provided a control method of the above-described aerosol generating apparatus, or a program that causes a processor to function as the control means of the aerosol generating apparatus.

### ADVANTAGEOUS EFFECTS OF INVENTION

According to the present invention, it is possible to unlock a locked state by a simple operation in an aerosol generating apparatus capable of receiving input operations of different operation modes in one operation unit.

Other features and advantages of the present invention will be apparent from the following descriptions taken in conjunction with the accompanying drawings, in which like reference characters designate the same or similar parts throughout the figures thereof.

### BRIEF DESCRIPTION OF DRAWINGS

The accompanying drawings, which are incorporated in and constitute a part of the specification, illustrate embodiments of the invention and, together with the description, serve to explain the principles of the invention.
Fig. 1 is a view showing an example of the outer appearance of an aerosol generating apparatus as an example of an electronic device according to an embodiment of the present invention;
Fig. 2 is a view for explaining an example of the outer appearance of the aerosol generating apparatus shown in Fig. 1, that is, an example in which a tobacco stick is inserted into the aerosol generating apparatus by opening a slide;
Fig. 3A is a block diagram showing an example of the functional configuration of the aerosol generating apparatus;
Fig. 3B is a block diagram showing an example of the functional configuration of a communication device;
Fig. 4A is a view for explaining an example of an input operation for an operation unit in the aerosol generating apparatus;
Fig. 4BA is a view (1) for explaining an example of LED control at the time of unlock in the aerosol generating apparatus;
Fig. 4BB is a view (2) for explaining an example of LED control at the time of unlock in the aerosol generating apparatus;
Fig. 4BC is a view (3) for explaining an example of LED control at the time of unlock in the aerosol generating apparatus;
Fig. 5 is a view for explaining state change of the aerosol generating apparatus;
Fig. 6 is a flowchart showing a series of operations of an unlock process executed in the aerosol generating apparatus;
Fig. 7A is a flowchart (1) showing another example of the unlock process executed in the aerosol generating apparatus; and
Fig. 7B is a flowchart (2) showing another example of the unlock process executed in the aerosol generating apparatus.

### DESCRIPTION OF EMBODIMENTS

Hereinafter, embodiments will be described in detail with reference to the attached drawings. Note that the following embodiments are not intended to limit the scope of the claimed invention, and limitation is not made an invention that requires all combinations of features described in the embodiments. Two or more of the multiple features described in the embodiments may be combined as appropriate. Furthermore, the same reference numerals are given to the same or similar configurations, and redundant description thereof is omitted.

### <Configuration of Aerosol Generating Apparatus>

In the following explanation, an aerosol generating apparatus having a lock function of limiting at least some operations in operations for an operation unit by a user will be described as an example.

### (Outer Appearance of Aerosol Generating Apparatus)

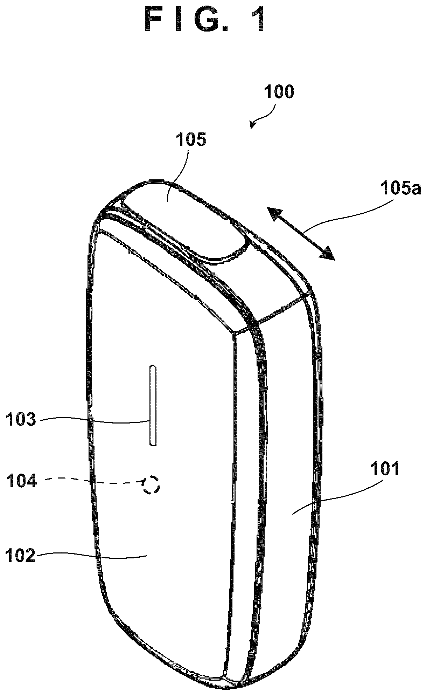

Fig. 1 shows an example of the outer appearance of an aerosol generating apparatus 100 according to this embodiment. The aerosol generating apparatus 100 includes, for example, a main body 101, a front panel 102, a display window 103, an operation member 104, and a slider 105.

The main body 101 is a housing having a predetermined shape, and internally supports, for example, one or more circuit boards of the aerosol generating apparatus 100. The main body 101 has, for example, a substantially cuboidal rounded shape elongated in the vertical direction of Fig. 1. The size of the main body 101 can be a size which the user can grasp with one hand.

The front panel 102 is a flexible panel covering the front surface of the main body 101. The front panel 102 is detachably connectable to the main body 101 by using a magnet or the like. The front panel 102 covers the operation member 104 for receiving a user input. The display window 103 is, for example, a band-like window extending along the longitudinal direction in substantially the center of the front panel 102. The display window 103 transmits light generated by one or more LEDs (Light-Emitting Diodes) arranged between the main body 101 and the front panel 102 to the outside.

The operation member 104 includes a physical button or the like and is disposed inside the front panel 102. When the user pushes the front panel 102 of a portion covering the operation member 104, the operation member 104 detects this user input and notifies a control unit 120 of the user input. Note that in this embodiment, a case in which the operation member 104 configured by a physical button is covered with the front panel 102 will be explained as an example. However, another configuration can also be used as long as a user operation can be received. The operation member 104 functions as an operation unit according to this embodiment. For example, the operation member 104 can be an input device of any kind such as a touch-sensitive surface or a switch exposed from the front panel.

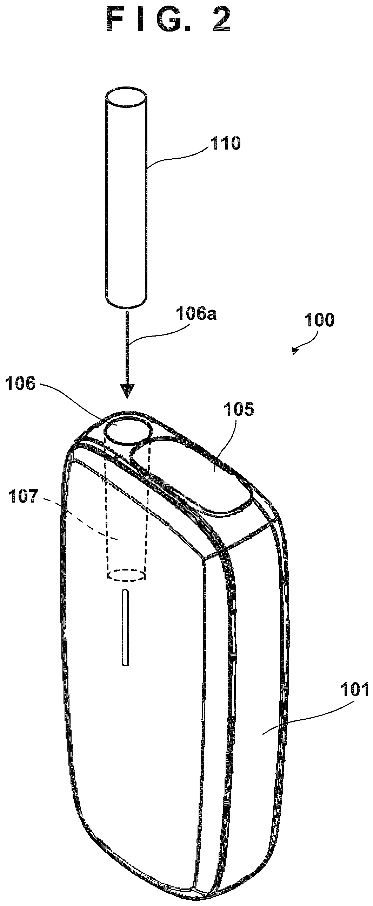

The slider 105 is a cover member slidably disposed along a direction 105a on the upper surface of the main body 101. The slider 105 is so configured as to open and close an opening for inserting an aerosol source. As shown in Fig. 2, for example, when the slider 105 slides to the near side (of the direction 105a in Fig. 1) (that is, when the slider 105 is set in an open state), the opening 106 in the upper surface of the main body 101 is exposed. When inhaling aerosol by using the aerosol generating apparatus 100, the user inserts a tobacco stick 110 into the opening 106 exposed by opening the slider 105. The tobacco stick 110 is inserted into a tubular insertion hole 107 from the opening 106 along a direction 106a. A section perpendicular to the axial direction of the insertion hole 107 can be, for example, circular, elliptical, or polygonal, and can be formed such that the sectional area gradually reduces toward the bottom surface. In this configuration, the inner surface of the insertion hole 107 pushes the outer surface of the tobacco stick 110 inserted into the insertion hole 107, thereby preventing a fall of the tobacco stick 110 by the frictional force. When the user finishes inhaling aerosol, he or she pulls out the tobacco stick 110 from the insertion hole 107, and closes the slider 105 (the slider 105 is set in a closed state). Note that the aerosol generating apparatus 100 is set in an operating state (to be described later) when the slider 105 is slid to the open state, and is set in a standby state (to be described later) when the slider 105 is slid to the closed state. The slider 105 also functions as the operation unit according to this embodiment. The operation member 104 and the slider 105 are used for an unlock operation to be described later. At this time, the operation member 104 may function as a first operation unit, and the slider 105 may function as a second operation unit.

The tobacco stick 110 is a tobacco product holding a filler inside a cylindrical rolling paper. The filler of the tobacco stick 110 can be, for example, a mixture of an aerosol generating base and shredded tobacco. As the aerosol generating base, it is possible to use a base containing an aerosol source of any kind, such as glycerin, propylene glycol, triacetin, 1,3-butanediol, or a mixture thereof. The shredded tobacco is a so-called flavor source. The material of the shredded tobacco can be, for example, a lamina or a backbone. Note that a flavor source not originating from tobacco may also be used instead of the shredded tobacco.

### (Functional Configuration of Aerosol Generating Apparatus)

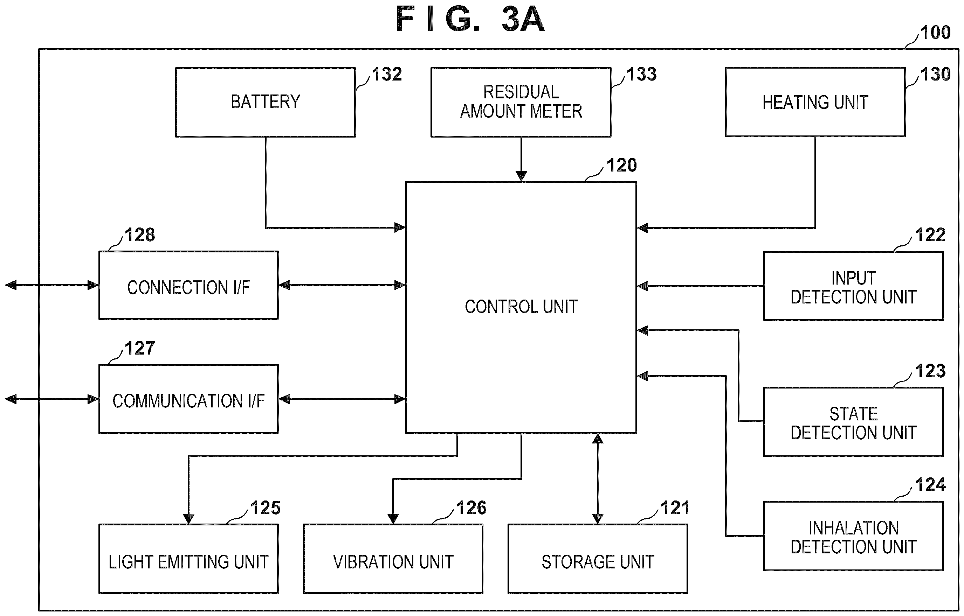

An example of the functional configuration of the aerosol generating apparatus 100 will be explained below with reference to Fig. 3A. Note that individual functional blocks to be explained below can be either integrated or separated. Also, a function to be explained can be implemented by another block. A block to be explained as hardware can be implemented as software, and vice versa.

The aerosol generating apparatus 100 includes, for example, the control unit 120, a storage unit 121, an input detection unit 122, a state detection unit 123, an inhalation detection unit 124, a light emitting unit 125, a vibration unit 126, a communication interface (I/F) 127, a connection I/F 128, a heating unit 130, and a battery 132.

The control unit 120 includes one or more processors and a volatile memory, and each processor can be a CPU (Central Processing Unit) or a microcontroller. The control unit 120 controls all functions of the aerosol generating apparatus 100 by loading a computer program (also called software or firmware) stored in the storage unit 121 into the memory and executing the loaded program. The storage unit 121 can be a nonvolatile memory or the like. The storage unit 121 stores, for example, one or more computer programs, and data describing a control sequence (heating profile) for controlling heating by the heating unit 130.

The control unit 120 controls unlock of the locked state of the aerosol generating apparatus by performing an unlock process to be described later. The locked state is a state in which the above-described lock function (that is, the function of limiting at least some operations in operations for the operation unit by the user) is enabled. Also, the control unit 120 controls the state change (to be described later) of the aerosol generating apparatus 100 in accordance with an input operation for the operation member 104 or the slider 105. When an input operation for requesting the start of heating for generating aerosol is detected, the control unit 120 starts supplying electric power from the battery 132 to the heating unit 130. The input operation for requesting the start of heating can be, for example, long press of the operation member 104 to be detected by the input detection unit 122. The control unit 120 can supply electric power from the battery 132 to the heating unit 130. The control unit 120 controls the temperature of the heating unit 130 by adjusting the duty ratio of a control pulse by pulse width modulation (PWM). Note that the control unit 120 can also use pulse frequency modulation (PFM) instead of PWM.

The input detection unit 122 is a detection circuit for detecting an input operation. The input detection unit 122 detects an input operation for the operation member 104 performed by, for example, pushing on the front panel 102, and outputs an input signal indicating the input operation to the control unit 120. Note that the aerosol generating apparatus 100 can also detect pushing itself on the front panel 102, instead of detecting pressing of the operation member 104. The input detection unit 122 and the state detection unit 123 to be described later can function as an operation unit that detects the input operation of the user

The state detection unit 123 is a detection circuit for detecting the open/closed state of the slider 105, and includes a Hall element or the like. The state detection unit 123 outputs a state detection signal indicating whether the slider 105 is open or closed to the control unit 120. The state detection unit 123 can also be configured to detect an attached/detached state of the front panel 102. The state detection unit 123 can include another Hall element for detecting removal of the front panel 102, and can output a state detection signal indicating the attached/detached state of the front panel 102 to the control unit 120.

The inhalation detection unit 124 is a detection circuit for detecting inhalation (puff) of the tobacco stick 110 by the user. For example, the inhalation detection unit 124 can include a thermistor (not shown) disposed near the opening 106. In this case, the inhalation detection unit 124 can detect inhalation by the user based on a change in resistance value of the thermistor resulting from a temperature change caused by the inhalation. As another example, the inhalation detection unit 124 can include a pressure sensor (not shown) disposed on the bottom of the insertion hole 107. In this case, the inhalation detection unit 124 can detect inhalation based on a reduction in atmospheric pressure resulting from an air current caused by the inhalation. The inhalation detection unit 124 outputs, for example, an inhalation detection signal indicating whether inhalation is performed to the control unit 120.

The light emitting unit 125 includes one or more LEDs, and a driver for driving the LEDs. The light emitting unit 125 turns on each LED in accordance with an instruction signal input from the control unit 120. The vibration unit 126 includes a vibrator (e.g., an eccentric motor) and a driver for driving the vibrator. The vibration unit 126 vibrates the vibrator in accordance with an instruction signal input from the control unit 120. The control unit 120 can control at least one of the light emitting unit 125 and the vibration unit 126 by any pattern, in order to notify the user of a certain status (for example, a state in which the locked state is unlocked) of the aerosol generating apparatus 100. For example, the light emission patterns of the light emitting unit 125 can be distinguished by elements such as the light emission state (on/blinking/off), the blinking period, light emission luminance, and the light color of each LED. The vibration patterns of the vibration unit 126 can be distinguished by elements such as the vibration state (vibration/stop), the vibration pattern, and the vibration strength of the vibrator.

The communication I/F 127 includes, for example, a communication circuit and an antenna, and functions as a communication interface with which the aerosol generating apparatus 100 wirelessly communicates with a communication device 200 (for example, a smartphone, a personal computer, or a tablet terminal owned by the user). The communication I/F 127 can be an interface complying with a wireless communication protocol, for example, short-range wireless communication such as Bluetooth^{®}, near-field wireless communication such as NFC (Near Field Communication), or a wireless LAN (Local Area Network).

The connection I/F 128 is a wired interface having a terminal for connecting the aerosol generating apparatus 100 to another external device. The connection I/F 128 can be a chargeable interface such as a USB (Universal Serial Bus) interface. The connection I/F 128 can also be used to charge the battery 132 from an external power supply (via a feeder (not shown)).

The heating unit 130 can include a resistive heat generating part that generates aerosol by heating an aerosol source included in the aerosol generating base of the tobacco stick 110. As a resistive heat generating material of this resistive heat generating part, it is possible to use a mixture of one or more of copper, a nickel alloy, a chromium alloy, stainless steel, and platinum rhodium. The heating unit 130 is connected to the battery 132 by a wire (not shown).

The battery 132 is a power supply for supplying electric power to the heating unit 130 and other constituent elements of the aerosol generating apparatus 100. Fig. 3A does not show feeders from the battery 132 to the constituent elements of the aerosol generating apparatus 100. The battery 132 can be, for example, a lithium-ion battery. A residual amount meter 133 may include, for example, an IC chip for monitoring the residual power amount and other statuses of the battery 132. The residual amount meter 133 can periodically measure the status values of the battery 132, such as the SOC (State Of Charge), the SOH (State Of Health), the RSOC, and the power supply voltage, and can output the measurement results to the control unit 120.

### <Configuration of Communication Device>

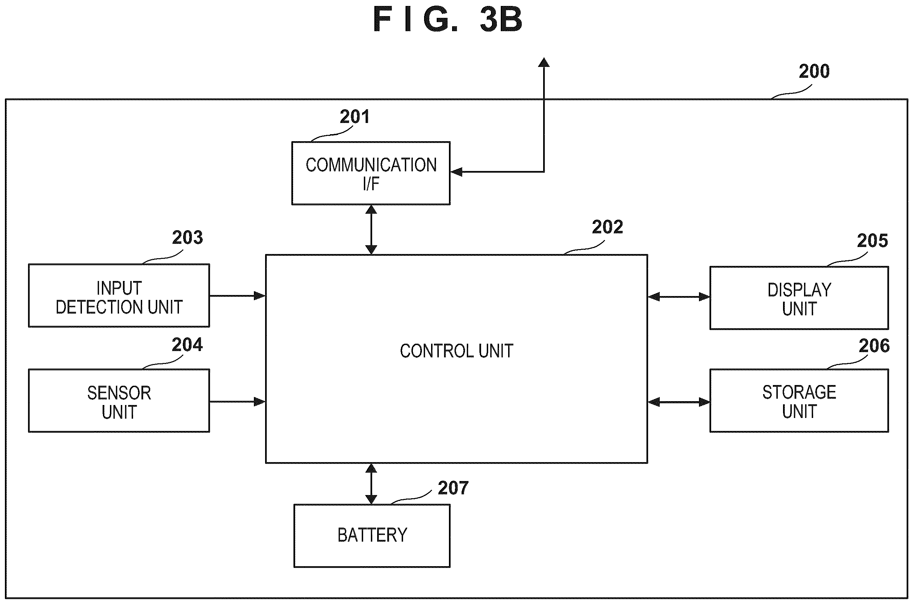

Next, a simplified configuration example of the communication device 200 will be explained with reference to Fig. 3B. The communication device 200 shown in Fig. 3B is, for example, a smartphone but may be a personal computer or a tablet terminal. Note that individual functional blocks to be explained below can be either integrated or separated. A function to be explained can be implemented by another block. A block to be explained as hardware can be implemented as software, and vice versa.

The communication device 200 includes, for example, a communication interface (I/F) 201, a control unit 202, an input detection unit 203, a sensor unit 204, a display unit 205, a storage unit 206, and a battery 207.

The communication I/F 201 includes a communication circuit or the like, and functions as a communication interface with which the communication device 200 wirelessly communicates with the aerosol generating apparatus 100 or the like. The communication I/F 127 can be an interface complying with a wireless communication protocol, for example, short-range wireless communication such as Bluetooth^{®}, near-field wireless communication such as NFC (Near Field Communication), or a wireless LAN (Local Area Network). The communication I/F 201 can further include an interface complying with a mobile communication protocol such as LTE, and can connect to the Internet via mobile communication and exchange data with an external server.

The control unit 202 includes one or more processors and a volatile memory, and each processor can be a CPU (Central Processing Unit) or the like. The control unit 202 controls all functions of the communication device 200 by loading a computer program recorded in the storage unit 206 into the memory and executing the loaded program.

The input detection unit 203 includes a button and a touch panel of the communication device 200, and receives operations for a setting screen for selecting or setting a heating profile of the aerosol generating apparatus 100, and for GUIs for various kinds of operations. Note that the GUIs for various kinds of operations can include a GUI of a browser application for displaying information provided from a server on the network, and a GUI of another application. When receiving an operation of setting or changing the heating profile, the control unit 202 can transmit information of the heating profile to the aerosol generating apparatus 100 via Bluetooth^{®}. The GUIs for various kinds of operations can also include a GUI configured to unlock the locked state of the aerosol generating apparatus 100. If the user inputs an operation of unlocking the locked state of the aerosol generating apparatus 100 via the GUI, the control unit 202 transmits a signal for unlocking the locked state to the aerosol generating apparatus 100. Upon receiving the signal for unlocking the locked state from the paired communication device 200, the aerosol generating apparatus 100 may unlock the locked state if the internal state allows the locked state to be unlocked. The aerosol generating apparatus 100 can judge the request from the authenticated (that is, reliable) communication device 200 paired in accordance with a predetermined procedure as a request from a reliable device and unlock the locked state. Upon receiving the signal for unlocking the locked state from the communication device 200, the aerosol generating apparatus 100 can perform the unlock without requesting the user to do an additional unlock operation, thereby facilitating the unlock operation.

The sensor unit 204 includes, for example, a GPS for specifying the current position of the communication device 200, an image sensor for obtaining a still image or a moving image of the circumference of the communication device 200, and a biometric authentication sensor for specifying the user of the communication device 200.

The display unit 205 includes a display panel such as an LCD or an OLED, and displays GUIs for various kinds of operations in accordance with instructions from the control unit 202. For example, the display unit 205 displays the setting screen for selecting or setting the heating profile of the aerosol generating apparatus 100 and the GUIs for various kinds of operations such as the GUI configured to unlock the locked state of the aerosol generating apparatus 100.

The storage unit 206 includes a nonvolatile memory such as a semiconductor memory, and stores set user information, computer programs such as applications to be executed by the control unit 202, and the like.

The battery 207 includes a lithium-ion battery or the like, and is a power supply for supplying electric power to each constituent element of the communication device 200. Fig. 3B does not show feeders from the battery 132 to the constituent elements of the communication device 200.

### <Example of Input Operation in Aerosol Generating Apparatus>

An input operation in the aerosol generating apparatus 100 will be described. If not in the locked state, the aerosol generating apparatus according to this embodiment can receive, for example, an input operation such as "three times of short press + two-second long press", which is determined in advance as an operation of starting pairing. That is, the aerosol generating apparatus 100 discriminatively receives input operations of different operation modes such as long press and short press. In other words, the aerosol generating apparatus 100 discriminatively receives a first pressing operation for the operation unit for a predetermined time or less and a second pressing operation for the operation unit for a time longer than the predetermined time.

For example, if the aerosol generating apparatus 100 is not in the locked state, the input operations include an operation of opening the slider 105, an operation of closing the slider 105, an operation of short-pressing the operation member 104, and an operation of long-pressing the operation member 104.

On the other hand, in the locked state, the aerosol generating apparatus receives the first pressing operation. That is, without discriminating the input operations of different operation modes, if an input operation for the operation member 104 is performed, the detected input operation is handled as short press. The aerosol generating apparatus 100 identifies the operation of opening the slider 105, the operation of closing the slider 105, and the operation of short-pressing the operation member 104 as the input operations for unlocking the locked state. In other words, in the locked state, the aerosol generating apparatus 100 receives the first pressing operation. In addition, the first pressing operation for the operation unit for the predetermined time or less and the second pressing operation for a time longer than the predetermined time are received as the first pressing operation without discrimination. If the input operation input by the user satisfies an operation condition, the aerosol generating apparatus 100 unlocks the locked state of the aerosol generating apparatus 100 or executes a predetermined function such as pairing after unlocking the locked state. In the embodiment to be described below, as a case where the input operation input by the user satisfies an operation condition, for example, a case where a series of patterns of an input operation determined by the user is input or a case where a series of patterns of a predetermined input operation such as pairing is input will be described as an example.

A short-pressing operation is, for example, an operation of pressing the operation member 104 for a time of 1,000 msec or less, and a long-pressing operation is, for example, an operation of pressing the operation member 104 for a time longer than 1,000 msec.

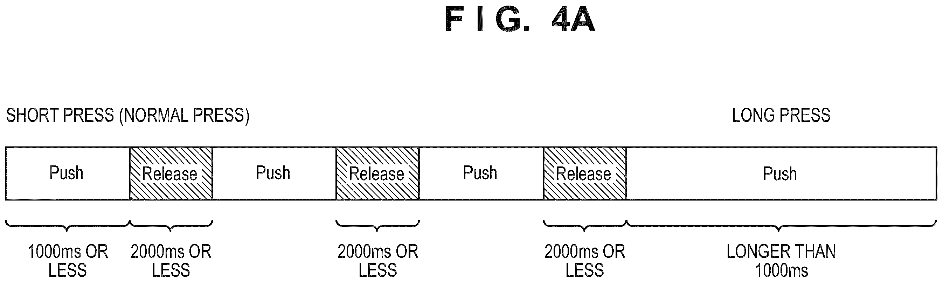

The control unit 120 can identify an operation input within a predetermined time as an operation of a series of patterns (also called combined press). At this time, for example, if a predetermined time elapses when a series of patterns determined by the user is input to the midway point, the control unit 120 clears the input to the midway point. If there is a pressing operation for 1,000 ms or less, as shown in Fig. 4A, the control unit 120 identifies the operation as short press (normal press). After that, the operation member 104 is released. If the operation member 104 is pressed again, and the release time is, for example, 2,000 msec or less, the control unit 120 judges that the preceding short press and the next pressing operation (short press or long press) are the operation of a series of patterns. A series of patterns shown as an example in Fig. 4A indicates an operation combining three times of short press and one time of long press.

The example shown in Fig. 4A shows a case where the operations of the series of patterns are formed using only operations for the operation member 104. However, the operations of the series of patterns may include opening/closing of the slider 105, as described above. To identify the operation of opening the slider 105 and the operation of closing the slider 105 as the operations of a series of patterns, the control unit 120 may apply the time interval (2,000 msec or less) applied to the operation member 104 or may apply a longer time interval to the operation of the slider 105. That is, the time intervals of operations may be changed for each operation target.

The user can set the operations of a series of patterns for unlocking the locked state in an unlock pattern setting mode. If a specific operation is detected during charge of the aerosol generating apparatus 100 (that is, in a state in which a USB connector is connected to the connection I/F 128, and electric power is supplied), the control unit 120 can operate in the unlock pattern setting mode. The specific operation can be, for example, a series of operations of opening the slider 105, closing the slider 105, and then long-pressing the operation member 104 for 2 sec.

In the unlock pattern setting mode, for example, upon receiving a series of patterns constituting six times of short press, the control unit 120 enables the lock function and stores the series of patterns in the storage unit 121. That is, the control unit 120 enables the lock function (sets the locked state), thereby requesting the user to input the series of patterns determined by the user. On the other hand, in the unlock pattern setting mode, if a predetermined number of operations (for example, three operations) are not input within a predetermined time, the control unit 120 disables the lock function. That is, since the lock function is disabled, the control unit 120 does not request the user to do the operation for unlock. The series of patterns may be constituted by, for example, 10 operations at maximum. If 10 operations are performed within a predetermined time, or if more than a predetermined number of operations and less than 10 operations are performed, and a predetermined time elapses, the control unit 120 may end the unlock pattern setting mode.

Note that in the following explanation, unless otherwise distinguished, an input operation for the slider 105 and an input operation for the operation member 104 will simply be described as an input operation for the operation member 104 without discrimination. The simple input operation includes at least one of an input operation for the slider 105 and an input operation for the operation member 104.

Also, if the USB connector is disconnected during reception of operations in the unlock pattern setting mode, the control unit 120 discards the input operations and returns the setting to the locked state before the unlock pattern setting mode is set. Also, in a state in which the front panel 102 is detached, or in a state in which the aerosol generating apparatus 100 is performing pairing with the communication device, even if a specific operation is detected during charge, the control unit 120 may not shift to the unlock pattern setting mode.

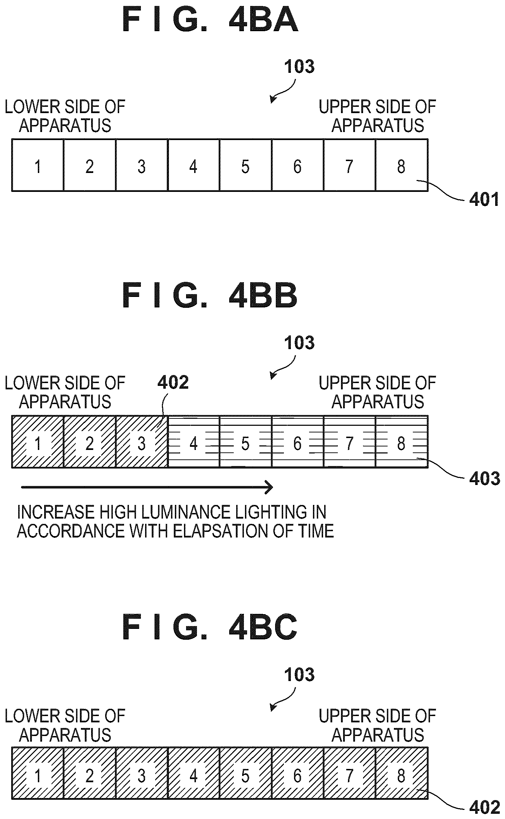

The light emitting modes of the light emitting unit 125 when unlocking the locked state will be described next with reference to Figs. 4BA to 4BC. Figs. 4BA to 4BC show eight LEDs visible from the display window 103. The left side of Figs. 4BA to 4BC corresponds to the lower side of the aerosol generating apparatus 100 (in Fig. 1), and the right side of Figs. 4BA to 4BC corresponds to the upper side of the aerosol generating apparatus 100 (in Fig. 1). Fig. 4BA schematically shows the state of the light emitting unit 125 when the control unit 120 is receiving a series of patterns for unlocking the locked state. As shown in Fig. 4BA as an example, during reception of a series of patterns, the control unit 120 need not turn on any LED (a display state 401 indicates an off state). The LEDs are inhibited from being issued during reception of a series of patterns. Hence, if input to the operation unit is done by an operation error or unintended contact, the residual battery amount can be prevented from unnecessarily lowering due to the LEDs turning on each time.

Note that as will be described later, the control unit 120 controls not to unlock the locked state (or not to receive a pattern) if the action state of the aerosol generating apparatus 100 is a predetermined state (a heating control state, a charge state, or a pairing execution state) in which heating of the heating unit 130 cannot be started.

Fig. 4BB shows the state of the light emitting unit 125 in a case where the input operation is a series of patterns determined by the user (that is, if the input operation matches a registered pattern). If the input operation is a series of patterns determined by the user, the control unit 120 makes all the LEDs to perform base-line lighting (a display state 403 indicates base-line lighting). The base-line lighting may be turning on the LEDs at a luminance of, for example, 5% the maximum luminance of the LEDs. Then, the luminance is changed to the luminance of normal lighting (a display state 402 indicates normal lighting) sequentially from LED 1 to LED 8. For example, the control unit 120 controls the light emitting states of the eight LEDs one by one during a time of, for example, 560 ms from the point of time of determining that the input operation is the series of patterns determined by the user. Finally, all LEDs in the light emitting unit 125 change to the display state 402, as shown in Fig. 4BC. Also, the control unit 120 may vibrate the vibration during, for example, 560 ms from the point of time of determining that the input operation is the series of patterns determined by the user. This can notify the user, by visual and tactile senses, that the locked state is to be unlocked. In addition, if the display state is sequentially changed from base-line lighting to normal lighting, it is possible to enhance the visual change and make a notification capable of easily catching the eye of the user.

In the above-described embodiment, although a case where a wrong input operation is done has not explicitly been explained, the LEDs may be caused to emit light in a mode different from the mode (Fig. 4BB) where the input operation matches a series of patterns. Alternatively, display may not be performed in order to maintain the residual battery amount, as in halfway through input of a series of patterns.

If the locked state is temporarily unlocked, the aerosol generating apparatus 100 can automatically perform relock. For example, after the locked state is unlocked, or after the elapse of a predetermined time (for example, 15 min) from completion of the last heating control state to be described later, the control unit 120 may set the locked state again. At this time, if inhalation is performed in the heating control state 10 min after the locked state is unlocked, the control unit 120 may perform relock after a predetermined time (15 min) from the end of the heating control state.

### <Examples of Action State of Aerosol Generating Apparatus>

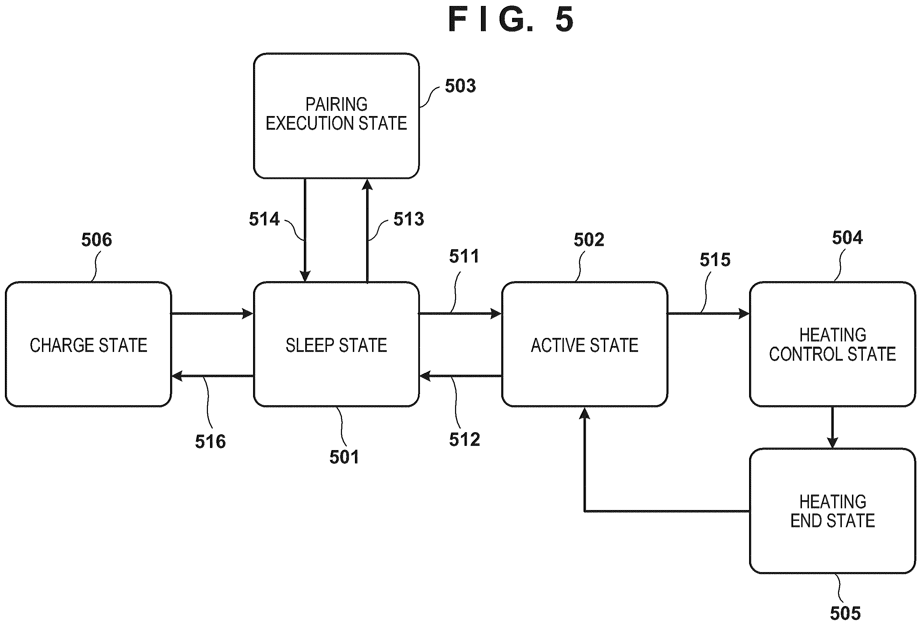

An example of the state change of the aerosol generating apparatus 100 will be explained with reference to Fig. 5. The aerosol generating apparatus 100 has several action states, and changes the state in accordance with a user input or the control by the control unit 120. The action states of the aerosol generating apparatus 100 include, for example, a sleep state 501, an active state 502, and a pairing execution state 503. In addition, the action states of the aerosol generating apparatus 100 can include one or more action states (for example, a heating control state 504 and a heating end state 505) that can be changed from the active state 502 as a starting point, and one or more action states (for example, a charge state 506) that can be changed from the sleep state 501 as a starting point.

The sleep state 501 is a state in which the operation being performed by the control unit 120 is temporarily stopped and the control unit 120 is caused to wait in a power saving state in which the power consumption is decreased. When the sleep state is canceled, the operation can be resumed from the state before the stoppage. The control unit 120 can receive a predetermined user input and, upon receiving a corresponding user input, can change the state to a state (for example, the active state 502 or the pairing execution state 503) corresponding to the user input. Note that in the following explanation, the sleep state is also called a standby state in some cases. In this embodiment, the sleep state 501 can be started by a method of "suspend" or "standby" by which the standby state begins while the contents of the memory of the control unit 120 are maintained, and can also be started by a method of "hibernation" by which the standby state begins while the contents of the memory of the control unit 120 are copied to the storage unit 121.

In the sleep state 501 of the aerosol generating apparatus 100, functions need not be operable except the function of detecting an input operation and the function of monitoring the residual battery amount.

The active state 502 is a state in which the functions of a device (for example, the aerosol generating apparatus 100) are not restricted. For example, at least the heating function is not restricted in the aerosol generating apparatus 100. Compared to the sleep state as the power saving state in which the power consumption is decreased, the active state can be a state in which the power saving state is canceled. Note that in the following explanation, the active state is also called an operating state in some cases.

In the aerosol generating apparatus 100, for example, when the slider 105 is closed in the active state 502, the control unit 120 controls the action state from the active state 502 (the operating state) to the sleep state 501 (the standby state) (for example, 512 in Fig. 5). Also, when the slider 105 is opened in the sleep state 501 in the aerosol generating apparatus 100, the control unit 120 controls the action state from the sleep state 501 (the standby state) to the active state 502 (the operating state) (for example, 511 in Fig. 5).

The pairing execution state 503 is a state for executing pairing of the communication device 200 and Bluetooth^{®}. When a predetermined input operation on the operation member 104 is detected with the slider 105 being closed in the sleep state 501, the control unit 120 changes the state to the pairing execution state (for example, 513 in Fig. 5). If the pairing (also called initialization) to the communication device 200 is successful, the control unit 120 registers the paired device in a white list held in the storage unit 121. If the registration to the white list is successful or the pairing is unsuccessful, the control unit 120 returns the action state from the pairing execution state 503 to the sleep state 501.

The control unit 120 can also change the action state to the heating control state 504 for performing the heating function (for example, generating aerosol) (for example, 515 in Fig. 5), in accordance with a predetermined input operation in the active state 502. The control unit 120 can change the action state to the active state 502 after that.

Alternatively, when a USB terminal is connected to the connection I/F 128, the control unit 120 can change the action state from the sleep state 501 to a state (for example, 506) for charging the aerosol generating apparatus (for example, 516 in Fig. 5).

### <Series of Operations of Unlock Process>

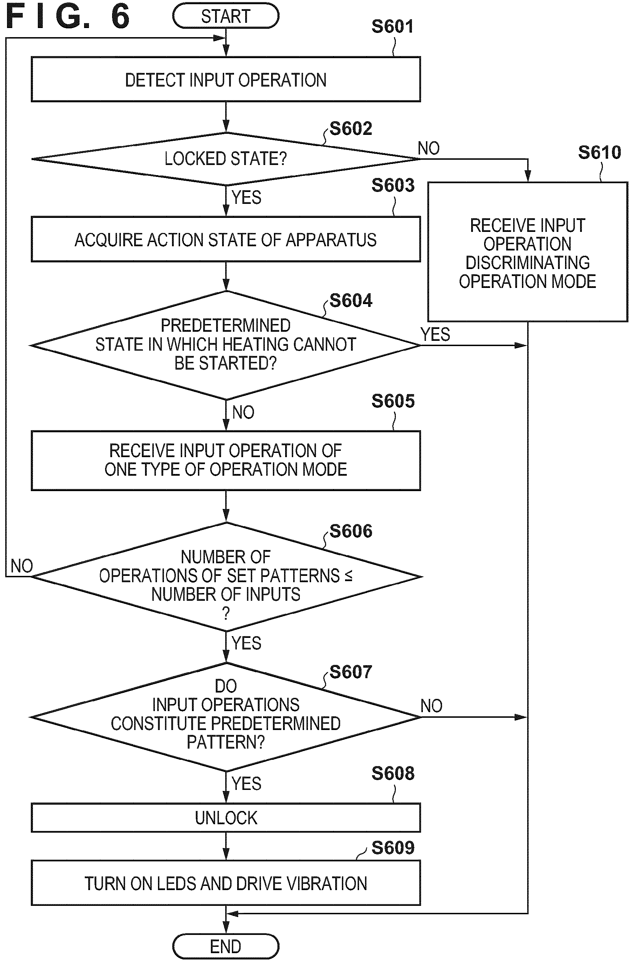

A series of operations of an unlock process to be executed in the aerosol generating apparatus 100 will be explained below with reference to Fig. 6. Note that this process is implemented by the processor of the control unit 120 by executing a program stored in the storage unit 121. In the following description, assume that the user inputs a series of inputs for unlocking the locked state one by one.

In S601, the control unit 120 detects an input operation via the input detection unit 122 and the state detection unit 123. In S602, the control unit 120 determines whether the aerosol generating apparatus 100 is in the locked state. For example, the control unit 120 holds information indicating the locked state by a predetermined method such as a flag when the lock function is enabled or disabled, and determines the locked state based on the held information indicating the locked state. Upon determining that the aerosol generating apparatus 100 is in the locked state, the control unit 120 advances the process to S603. Otherwise, the control unit 120 advances the process to S610.

In S603, the control unit 120 acquires the action state of the aerosol generating apparatus 100. For example, the control unit 120 can acquire the action state via units such as the state detection unit 123 and store information indicating the action state of the apparatus in the memory or the storage unit 121 every time the action state changes. When acquiring the action state, the control unit 120 can acquire the action state in which, for example, the aerosol generating apparatus 100 is in the standby state, by referring to the information indicating the action state and stored in the memory or the storage unit 121.

In S604, the control unit 120 determines whether the action state of the aerosol generating apparatus 100 is a state in which heating of the heating unit 130 cannot be started. For example, the control unit 120 determines whether the action state of the aerosol generating apparatus 100 is the pairing execution state (that is, a state in which initialization of short range wireless communication is performed). If the action state of the aerosol generating apparatus 100 is the pairing execution state, the control unit 120 determines that it is the state in which heating of the heating unit 130 cannot be started, and ends the series of operations. Otherwise, the control unit 120 advances the process to S605.

Alternatively, the control unit 120 determines whether the action state of the aerosol generating apparatus 100 is the charge state. If the action state of the aerosol generating apparatus 100 is the charge state, the control unit 120 determines that it is the state in which heating of the heating unit 130 cannot be started, and ends the series of operations. Otherwise, the control unit 120 may advance the process to S605.

Alternatively, the control unit 120 determines whether the action state of the aerosol generating apparatus 100 is the heating control state. If the action state of the aerosol generating apparatus 100 is the heating control state, the control unit 120 determines that it is the state in which heating of the heating unit 130 cannot be started, and ends the series of operations. Otherwise, the control unit 120 may advance the process to S605.

Alternatively, the control unit 120 determines whether the front panel 102 is detached. If the front panel 102 is detached, the control unit 120 determines that it is the state in which heating of the heating unit 130 cannot be started, and ends the series of operations. Otherwise, the control unit 120 may advance the process to S605. If the detachment of the front panel is taken into consideration, it is possible to unlock the locked state only when the aerosol generating apparatus 100 is being used in an appropriate state and then enable heating of the heating unit 130.

The control unit 120 may determine, based on a signal from the residual amount meter 133, whether the residual battery amount is less than a predetermined threshold. That is, if the residual battery amount is less than a predetermined threshold, the control unit 120 may determine that it is the state in which heating of the heating unit 130 cannot be started. If the residual battery amount is taken into consideration, it is possible to prevent the quality of user experience from lowering due to shortage in electric power when the user starts inhalation of aerosol.

Note that in a case where the action state changes to the state in which heating cannot be started after an input operation for the operation unit is started, and before the input operation constitutes a series of patterns determined by the user, the control unit 120 does not receive an input operation after the action state changes to the state in which heating cannot be started. At this time, the control unit 120 discards the input operation received before the action state changes to the state in which heating cannot be started.

In S605, the control unit 120 receives an input operation for the operation unit. At this time, in the locked state, the control unit 120 receives an input operation (for example, short press) of one type of operation mode. If an input operation such as long press whose operation mode is different from short press is input, the control unit 120 can receive it as short press without discriminating between long press and short press.

Also, the control unit 120 may execute S604 first and may not receive an input operation in the state in which heating cannot be started. This can prevent occurrence of a situation where inhalation is impossible even if lock is unlocked. The control unit 120 temporarily stores the received input operation in for example, the memory of the control unit 120. In this case, the memory stores a series of input operations received so far.

In S606, the control unit 120 determines whether the number of received input operations is equal to or larger than the number of operations of a series of patterns set for unlock. The control unit 120 compares, for example, the number of received input operations (for example, six) and the number of operations of a series of patterns set for unlock (for example, "six times of short press" set in advance). Upon determining that the number of received input operations is equal to or larger than the number of operations of a series of patterns set for unlock, the control unit 120 advances the process to S607. Otherwise (that is, if the number of input operations is smaller than the number of operations set for unlock), the control unit 120 returns the process to S601 to further receive an input.

In S607, the control unit 120 determines whether the received input operations constitute a predetermined series of patterns. For example, the control unit 120 compares the series of input operations received so far and stored in the memory (for example, "six times of short press") and the series of patterns set for unlock. If the series of patterns set is, for example, "six times of short press" set in advance, the control unit 120 compares the series of received input operations and " six times of short press" set in advance. If these match, each target unit 120 determines that the input operations constitute the predetermined series of patterns, and advances the process to S608. Otherwise, the control unit 120 determines that the received input operations do not match the unlock pattern (the inputs are not correct), and ends the series of processes.

In S608, the control unit 120 unlocks the locked state of the aerosol generating apparatus 100. In S609, the control unit 120 turns on the LEDs and drives the vibration, as described with reference to, for example, Figs. 4BA to 4BC. If lighting of the LEDs and driving of the vibration in S609 are completed, the control unit 120 completes the series of processes.

In S610, since the aerosol generating apparatus 100 is not in the locked state, the control unit 120 receives an input operation while discriminating the operation mode such as short press or long press. At this time, since the locked state need not be unlocked, the control unit 120 ends the series of operations of this process. After the end of the process, the control unit 120 may execute the operation of a function according to the received input operation.

As described above, in this embodiment, the control unit 120 controls to a state in which the locked state of the aerosol generating apparatus 100 is unlocked in accordance with an input operation or controls to execute a predetermined function according to an input operation. At this time, if the aerosol generating apparatus is not in the locked state, the control unit 120 discriminatively receives a first operation for the operation unit and a second operation of a different operation mode for the operation unit. On the other hand, if the aerosol generating apparatus is in the locked state, the control unit 120 receives the first operation for the operation unit. This makes it possible to unlock the locked state by a simple operation in the aerosol generating apparatus capable of receiving input operations of different operation modes in one operation unit.

### <Another Example of Unlock Process>

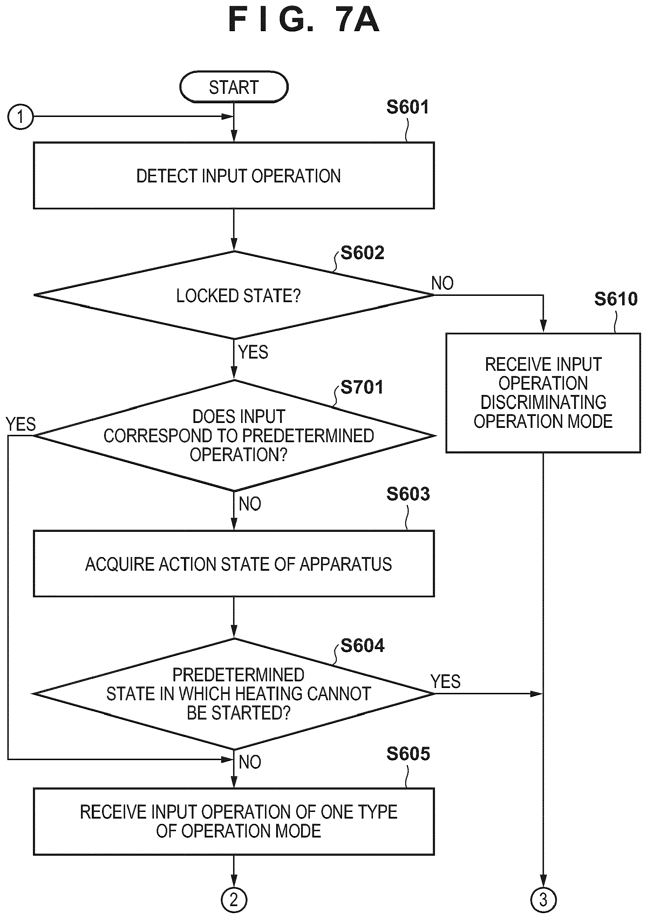

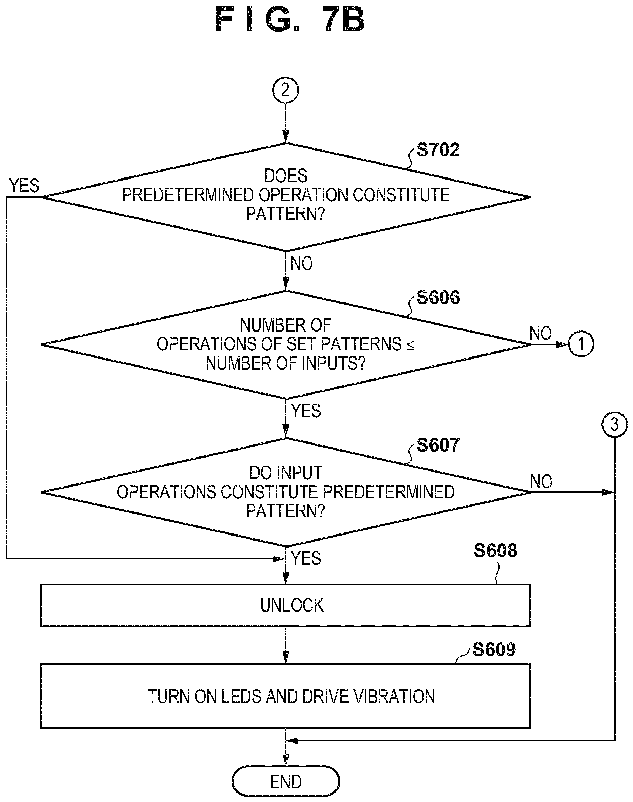

Another embodiment of the unlock process to be executed in the aerosol generating apparatus 100 will be explained below with reference to Figs. 7A and 7B. In this process, in addition to the operation of the unlock process described above with reference to Fig. 6, a predetermined operation (to be referred to as a predetermined operation) assigned to another function is preferentially received. Note that this process is implemented by the processor of the control unit 120 by executing a program stored in the storage unit 121. In the following description, the same step numbers as in Fig. 6 denote the same or substantially same operations, and a repetitive description thereof will be omitted.

The control unit 120 executes the processes of S601 and S602 as in the operation shown in Fig. 6 described above, and if the aerosol generating apparatus 100 is in the locked state, advances the process to S701. If the aerosol generating apparatus 100 is not in the locked state, the control unit 120 advances the process to S610 and then ends the series of operations of the process. In this case, after the end of the process, the control unit 120 executes the assigned function in accordance with the received input operation.

In S701, the control unit 120 determines whether the input operation corresponds to a predetermined operation. The predetermined operation is, for example, a predetermined operation (for example, three times of short press and one time of long press for the operation unit) for executing pairing of Bluetooth'. However, since this step handles an input operation detected in the locked state, the predetermined operation is identified as, for example, four-times of short press. If the input operations performed so far correspond to a series of patterns constituting a predetermined operation (for example, if the input operations performed so far are two-times of short press), the control unit 120 receives the input in S605 to execute the function assigned to the predetermined operation (without performing the determination processes of S603 and S604). In other words, if the input operations correspond to a series of patterns of a predetermined operation, the control unit 120 can receive the input operations that can correspond to the predetermined operation without considering the action state of the apparatus.

In S702, the control unit 120 determines whether the received input operations constitute a series of patterns of a predetermined operation. If the received input operations constitute a series of patterns of a predetermined operation (for example, three-times of short press and one-time of long press for pairing), the control unit 120 advances the process to S608 to unlock the locked state and preferentially execute pairing. Since the aerosol generating apparatus 100 is in the locked state, the control unit 120 performs the determination while considering that a series of patterns of the predetermined operation of pairing includes three-times of short press and one-time of long press (that is, four-times of short press). If the received input operations do not constitute a series of patterns of a predetermined operation, the control unit 120 executes the processes of S606 and S607 shown in Fig. 6 (the determination processes for unlock). After that, the control unit 120 executes the processes of S608 and S609 as described above, and ends the series of processes.

Hence, if the predetermined operation is registered in the aerosol generating apparatus 100, the predetermined operation can preferentially be executed. Note that in the example shown in Figs. 7A and 7B, if the predetermined operation is registered, the priority of execution of the function assigned to the predetermined operation is always higher than that of setting of a state in which the locked state is unlocked. However, whether to set a state in which the locked state is unlocked or execute the predetermined function according to the input operation may be decided in accordance with the priority of the function to be executed. At this time, the control unit 120 may refer to, for example, priority information that sets the priority of execution of the function assigned to the predetermined operation and the priority of setting of the state in which the locked state is unlocked.

The control unit 120 refers to the priority information and, if the priority of execution of the predetermined function assigned to the predetermined operation is higher than that of setting of the state in which the locked state is unlocked, executes the predetermined function. Conversely, the control unit 120 refers to the priority information and, if the priority of execution of the predetermined function is lower than that of setting of the state in which the locked state is unlocked, sets the aerosol generating apparatus 100 in the state in which the locked state is unlocked. The predetermined function in the aerosol generating apparatus 100 may include, for example, a setting function for the aerosol generating apparatus 100. The setting function is, for example, a function of doing a setting for the aerosol generating apparatus 100, and includes a function of changing an operation parameter of the aerosol generating apparatus 100 or enabling or disabling a function of the aerosol generating apparatus 100. Also, the setting function may include a function of making the communication function or lock function of the aerosol generating apparatus 100 usable, a function of, for example, performing initialization (pairing) of short range wireless communication with an external communication device, or a function of registering a series of operations for unlocking the locked state of the aerosol generating apparatus 100. The priority of execution of the setting function for the aerosol generating apparatus 100 may be higher than that of setting of the state in which the locked state is unlocked. For example, if the priority of execution of pairing is higher than that of setting of the state in which the locked state is unlocked, the control unit 120 preferentially executes pairing.

The priority set in the priority information may be, for example, fixed priority determined in advance at the time of manufacturing or may be settable by the user. If the priority set in the priority information can be set by the user, the control unit 120 may set or change the priority set in the priority information based on a user operation received via the operation unit of the aerosol generating apparatus 100. Alternatively, the control unit 120 may set or change the priority set in the priority information by receiving a request for changing or setting priority from the paired communication device 200.

In this way, the control unit 120 can unlock the locked state of the aerosol generating apparatus while preferentially executing the predetermined operation. If the function assigned to the predetermined operation is not to be executed, and the action state of the aerosol generating apparatus is a state in which heating of the heating unit 130 cannot be started (described concerning S604), unlock of the locked state can be inhibited. This makes it possible to unlock the lock of the aerosol generating apparatus at an appropriate timing.

Note that in the above-described embodiment, a case where the operation member 104 is a physical button has been described as an example. That is, if the aerosol generating apparatus 100 is not in the locked state, the control unit 120 discriminates the first operation and the second operation of different operation modes for the physical button. At this time, the first operation is a pressing operation for the operation unit for a predetermined time or less, and the second operation is a pressing operation for the operation unit for a time longer than the predetermined time. If the aerosol generating apparatus 100 is in the locked state, the control unit 120 receives an input operation for the physical button as the first operation.

However, the operation member 104 may be an operation unit capable of identifying the strength of the pressing force. In this case, the input operations may include a pressing operation for the operation unit with a predetermined force strength or less and a pressing operation for the operation unit with a force stronger than the predetermined force. At this time, if the aerosol generating apparatus 100 is not in the locked state, the control unit 120 discriminates the operations of different operation modes (different force strengths). For example, the first operation can be a pressing operation for the operation unit with a predetermined force strength or less, and the second operation can be a pressing operation for the operation unit with a force stronger than the predetermined force. On the other hand, if the aerosol generating apparatus 100 is in the locked state, the control unit 120 may receive an input operation for the operation unit as the first operation.

Also, the operation member 104 may be a touch panel exposed from the front panel 102. In this case, the input operations may include a tap operation for the touch panel and a flick operation along the surface of the touch panel. At this time, if the aerosol generating apparatus 100 is not in the locked state, the control unit 120 discriminates the first operation and the second operation of different operation modes for the touch panel. For example, the first operation for the touch panel can be a tap operation for the touch panel that is the operation unit, and the second operation for the touch panel can be a flick operation along the surface of the touch panel. On the other hand, if the aerosol generating apparatus 100 is in the locked state, the control unit 120 may receive an input operation for the touch panel as the first operation.

Also, in the above-described unlock process, a case where the control unit 120 receives an input operation and unlocks the locked state has been described as an example. However, the above-described embodiment can be applied to a case where a signal for unlocking the locked state, which is transmitted via Bluetooth from the paired communication device is received to unlock the locked state. That is, upon receiving the signal for unlocking the locked state from the paired communication device, the control unit 120 may unlock the locked state of the aerosol generating apparatus 100.

The invention is not limited to the foregoing embodiments, and various variations/changes are possible within the spirit of the invention.

This application claims priority from Japanese Patent Application No. 2021-076012 filed April 28, 2021, which is hereby incorporated by reference herein.

### REFERENCE SIGNS LIST

100...aerosol generating apparatus, 200...communication device, 120...control unit, 127...communication I/F, 122...input detection unit, 123...state detection unit

## Claims

1. An aerosol generating apparatus comprising:
an operation unit configured to detect an input operation by a user; and
control means for, in accordance with the input operation detected by the operation unit, unlocking a locked state of the aerosol generating apparatus or unlocking the locked state and executing a predetermined function according to the input operation,
wherein if the aerosol generating apparatus is not in the locked state, the control means discriminatively receives a first operation for the operation unit and a second operation of a different operation mode for the operation unit, and if the aerosol generating apparatus is in the locked state, the control means receives the first operation for the operation unit.

2. The aerosol generating apparatus according to claim 1, wherein the first operation is a pressing operation for the operation unit for not more than a predetermined time, and the second operation is a pressing operation for the operation unit for a time longer than the predetermined time.

3. The aerosol generating apparatus according to claim 1 or 2, wherein the first operation is a pressing operation for the operation unit with not more than a predetermined force strength, and the second operation is a pressing operation for the operation unit with a force stronger than the predetermined force.

4. The aerosol generating apparatus according to any one of claims 1 to 3, wherein the first operation is a tap operation for a touch panel that is the operation unit, and the second operation is a flick operation along a surface of the touch panel.

5. The aerosol generating apparatus according to any one of claims 2 to 4, wherein if the aerosol generating apparatus is in the locked state, the control means receives the first operation and the second operation for the operation unit as the first operation without discrimination.

6. The aerosol generating apparatus according to any one of claims 1 to 5, further comprising setting means for setting an operation condition of the input operation determined by the user for unlocking the locked state,
wherein upon receiving the input operation in the locked state, if the operation condition of the input operation set in advance to execute the predetermined function equals the operation condition of the input operation determined by the user, the control means executes the predetermined function.

7. The aerosol generating apparatus according to any one of claims 1 to 5, further comprising setting means for setting an operation condition of the input operation determined by the user for unlocking the locked state,
wherein upon receiving the input operation in the locked state, if the operation condition of the input operation set in advance to execute the predetermined function equals the operation condition of the input operation determined by the user, the control means decides, based on priority of the predetermined function, whether to set a state in which the locked state is unlocked or execute the predetermined function according to the input operation.

8. The aerosol generating apparatus according to claim 7, wherein the priority of the predetermined function can be set by the user.

9. The aerosol generating apparatus according to claim 7, wherein the priority of the predetermined function is determined in advance, and
priority of execution of a function of doing a setting for the aerosol generating apparatus is higher than priority of setting of the state in which the locked state is unlocked.

10. The aerosol generating apparatus according to claim 9, further comprising communication means capable of performing short range wireless communication with an external communication device,
wherein a function of doing a setting for the aerosol generating apparatus includes a function of performing initialization of the short range wireless communication with the external communication device.

11. The aerosol generating apparatus according to any one of claims 1 to 9, further comprising communication means capable of performing short range wireless communication with an external communication device,
wherein the control means receives a signal for unlocking the locked state from the external communication device for which the initialization of the short range wireless communication is performed, thereby unlocking the locked state of the aerosol generating apparatus.

12. The aerosol generating apparatus according to any one of claims 1 to 11, wherein if an action state of the aerosol generating apparatus is a predetermined state in which heating of heating means of the aerosol generating apparatus cannot be started, the control means does not unlock the locked state.

13. The aerosol generating apparatus according to claim 12, further comprising a chargeable power supply,
wherein the predetermined state includes a state in which the power supply is being charged.

14. The aerosol generating apparatus according to claim 12, further comprising a chargeable power supply,
wherein the predetermined state includes a state in which a residual battery amount of the power supply is less than a predetermined value.

15. The aerosol generating apparatus according to claim 12, wherein the predetermined state includes a state in which the initialization of the short range wireless communication with the external communication device is being performed.

16. A control method of an aerosol generating apparatus, comprising:
in accordance with an input operation by a user detected by an operation unit, unlocking a locked state of the aerosol generating apparatus or unlocking the locked state and executing an operation according to the input operation,
wherein in the unlocking the locked state or the unlocking the locked state and executing the operation according to the input operation, if the aerosol generating apparatus is not in the locked state, a first operation for the operation unit and a second operation of a different operation mode for the operation unit are discriminatively received, and if the aerosol generating apparatus is in the locked state, the first operation for the operation unit is received.

17. A program configured to cause a processor to function as control means of an aerosol generating apparatus defined in any one of claims 1 to 15.
